# EUROPÄISCHE PATENTSCHRIFT

(11) **EP 3 539 524 B1**
(45) Veröffentlichungstag und Bekanntmachung des Hinweises auf die Patenterteilung: **08.12.2021**
(21) Anmeldenummer: 19163110.0
(22) Anmeldetag: 15.03.2019
(51) Int. Cl.: A61G 12/00

(54) **KLEMMSCHIENE FÜR PFLEGE- BZW. ORGANISATIONSWAGEN**
CLAMPED BAR FOR NURSING- OR ORGANIZATION TROLLEY
BARRE DE SERRAGE POUR CHARIOT DE SOINS OU D'ORGANISATION

(30) Priorität: 16.03.2018 DE 202018101481 U
(43) Veröffentlichungstag der Anmeldung: 18.09.2019
(73) Patentinhaber: ZARGES GmbH, 82362 Weilheim (DE)
(72) Erfinder: Soytürk, Erkan, 82362 Weilheim (DE); Krichenbauer, Florian, 82362 Weilheim (DE)
(74) Vertreter: Baronetzky, Klaus

(56) Entgegenhaltungen:
- DE-A1-102006 012 766
- US-A1- 2007 228 680

## Beschreibung

Die Erfindung betrifft einen Pflege- bzw. Organisationswagen gemäß dem Oberbegriff des Anspruchs 1.

Pflege- bzw. Organisationswägen werden weithin in Krankenhäusern verwendet, um z.B. Medikalprodukte zu transportieren, und/oder dienen zur Unterstützung der stationsinternen Abläufe zur mobile Lagerhaltung für weitere Gegenstände wie z.B. medizinische Geräte und/oder Desinfektionsmittel.

Es ist bereits vorgeschlagen worden, solche Gegenstände bzw. Medikalprodukte nicht nur in einem Pflege- bzw. Organisationswagen zu lagern, sondern, wenn diese z.B. häufiger benötigt werden, auch bei Bedarf seitlich an dem Pflege- bzw. Organisationswagen, damit diese einfacher und praktischer zur Verfügung gestellt werden können. Dadurch können die übrigen innerhalb des Wagens befindlichen Gegenstände erschütterungsfrei dort verbleiben, also ohne z.B. versehentlich umgekippt oder umgestoßen zu werden.

Um diese Gegenstände, die auch als Zubehör angesehen werden können, seitlich an einem Pflege- bzw. Organisationswagen anzuhängen, ist ein zusätzliches Bauelement erforderlich.

Es ist bekannt geworden, Pflege- bzw. Organisationswägen mit einem seitlichen Trage- bzw. Handgriff zur Anbringung von Zubehör. Der Tragegriff wird durch zwei Sacklöcher an dem dortigen Funktionswagen fest anmontiert. Der Tragegriff ragt über die Seitenfläche des Funktionswagens heraus und erstreckt sich seitlich des Wagens.

Obwohl ggf. bei Bedarf mehrere Gegenstände dort angehängt bzw. aufgehängt werden können, wenn das Zubehör in einer unterschiedlichen Höhe an dem Wagen anzuhängen ist, ist dies bei einem derartigen Pflege- bzw. Organisationswagen nicht möglich.

Es sind auch andere Pflege- bzw. Organisationswägen bekannt, die je ein Schienensystem für die Anbringung von Zubehör aufweisen. Das Schienensystem weist in der Regel Säulen und Bügel auf, die senkrecht zueinander angeordnet sind. Die Säulen sind durch zusätzliche Verbindungselemente mit dem Wagen fest verbunden, und die Bügel mit Zubehör sind vertikal an den Säulen verschiebbar.

Jedoch ist ein derartiges Schienensystem recht komplex. Die erforderlichen zahlreichen Bauelemente des Schienensystems an dem Wagen gefährden zudem das Gleichgewicht des Wagens und könnten zum Umkippen des Wagens führen, insbesondere, wenn der Wagen schnell abbiegt.

Die Druckschrift DE 10 2006 012 766 A1 betrifft ein Befestigungssystem für medizintechnische Geräte. Dieses umfasst ein säulenförmiges Schnittstellenprofilelement, das einen linsenförmigen Querschnitt aufweist mit zumindest einer konvex geformten längeren Stirnfläche und mit zwei zueinander parallelen, kürzeren Seitenflächen.

Die Druckschrift US 2007/228680 A1 betrifft eine Arbeitsstation mit einer Anwendungsstelle, die eine Basiseinheit, eine Stromversorgungseinheit, eine Trageinheit, eine Arbeitsfläche und eine Speichereinheit, eine Monitoranordnung und eine Steuereinheit umfasst.

Daher liegt der Erfindung die Aufgabe zugrunde, einen Pflege- bzw. Organisationswagen gemäß dem Oberbegriff von Anspruch 1 zu schaffen, mit dem Zubehör an dem Wagen in einer einfachen und sicheren Weise angehängt werden kann.

Diese Aufgabe wird erfindungsgemäß durch einen Gegenstand nach Anspruch 1 gelöst. Vorteilhafte Weiterbildungen ergeben sich aus den Unteransprüchen. Überraschend wird die Handhabung von Pflege- bzw. Organisationswägen erfindungsgemäß verbessert. Es ist im Krankenhaus wichtig, dass Pflege- bzw. Organisationswägen bei Bedarf aneinanderzureihen sind, und zwar teils rechts und teils links. Ein bekannter Pflege- bzw. Organisationswagen weist seitlich Bauelemente wie etwa einen Tragegriff oder ein Schienensystem zur Anbringung von Zubehör auf, und es ist insofern kaum möglich, eine gute Aneinanderreihung zu realisieren. Erfindungsgemäß ist eine Klemmschiene vorgesehen, an der Zubehör angebracht oder aufgebracht werden kann. Die Klemmschiene ist unmittelbar an dem Wagen angebracht, bevorzugt an Eckprofilen des Wagens. Sie ist leicht vom Wagen zu lösen, was das genannte Problem ohne weiteres, beseitigt.

Vorteilhaft ist es, dass die Klemmschiene erfindungsgemäß an zwei Eckprofilen des Wagens fixiert wird. Dadurch ist am Wagen zur Befestigung der Klemmschiene kein weiteres Bauelement mehr erforderlich. Dies reduziert überraschend den Platzbedarf eines Pflege- bzw. Organisationswagens mit angehängtem Zubehör und führt daher zu einer weiter verbesserten Einsetzbarkeit der Wägen.

Erfindungsgemäß ist die Klemmschiene leicht an dem Pflege- bzw. Organisationswagen fixierbar und von diesem abnehmbar. Hierzu weist der Pflege- bzw. Organisationswagen Eckprofile auf, von denen mindestens eines eine sich vertikal erstreckende Hinterschneidung aufweist. Die Klemmschiene weist ein Spannelement auf, das an der Hinterschneidung formschlüssig mit dem Eckprofil verbunden werden kann. Durch das Lösen des Spannelements wird die Klemmschiene vom Pflege- bzw. Organisationswagen gelöst.

Mit der formschlüssigen Verbindung ergibt sich eine recht große Reibungskraft an der Kontaktfläche zwischen der Klemmschiene und dem Pflege- bzw. Organisationswagen. Erfindungsgemäß kann Zubehör mit dem Gewicht z.B. bis 5 kg, insbesondere bis 10 kg, sicher an dem Pflege- bzw. Organisationswagen angehängt werden, ohne dass die Gefahr bestände, dass die Klemmschiene nach unten rutscht. Der Einsatzsicherheit kommt die vergleichsweise hohe Klemmkraft mittels des Spannelements und des Gegenhaltelements zugute. Diese kann z.B. 100 N betragen.

Falls z.B. zur Aufbewahrung der Pflege- bzw. Organisationswägen diese aneinanderzureihen sind, können erfindungsgemäß zunächst die Klemmschienen leicht abgenommen werden. Und ggf. für die Wiederverwendung in den Wägen gelegt werden. Die erfindungsgemäßen Hinterschneidungen an den Eckprofilen beeinflussen nicht die Aneinanderreihung der Wägen, sondern können erfindungsgemäß sogar als Referenzlinie für die Ausrichtung der Wägen dienen.

Erfindungsgemäß ist das Zubehör horizontal auf der Klemmschiene verschiebbar, um es an verschiedene Anwendungsszenarien anzupassen.

Erfindungsgemäß ist die Höhe der Klemmschiene an dem Pflege- bzw. Organisationswagen verstellbar und frei auswählbar. Damit ist es möglich, bei Bedarf Zubehör leicht in verschiedenen Höhen des Wagens anzuhängen. Die Hinterschneidung des Eckprofils erstreckt sich vertikal, insbesondere bis zur oberen Fläche oder zu einer Arbeitsplatte des Wagens. Um freier in der Wahl der Höhe der Klemmschiene zu sein, erstreckt sich die Hinterschneidung des Eckprofils idealerweise über mindestens 50%, bevorzugt mindestens 80%, insbesondere mehr als 90% der vertikalen Höhe des Wagens. An jeglicher Stelle der Hinterschneidung kann die Klemmschiene mit ihrem Spannelement verspannt werden.

Vorteilhaft ist es auch, wenn die Hinterschneidung symmetrisch zu ihrer vertikalen Mttenachse ausgebildet ist und insbesondere wahlweise ein Einhängen der Spannelements der Klemmschiene dergestalt ermöglicht, dass der Verbindungsbügel der Klemmschiene - von der Hinterschneidung aus gesehen - entweder zu der einen oder zu der anderen horizontalen Seite weist. Die Klemmschiene lässt sich so an der Längsseite des Wagens, oder an dessen Querseite montieren, und zwar in unveränderter Form, wenn beide gleich lang sind.

Auch bei nicht-quadratischem, rechteckigen Grundriss des Wagen läßt sich die so gewonnene Variabilität ausnutzen, wobei dann eine Klemmschiene mit längerem und einen mit kürzerem Verbindungsbügel verwendet wird.

Diese lassen sich beliebig kombinieren und nutzen beide das gleiche Eckprofil, die gleiche Hinterschneidung, ein gleiches Spannelement und ein gleiches Gegenhaltelement.

Es ist besonders vorteilhaft, dass beim mindestens teilweisen Lösen des Spannelements die Klemmschiene in die vertikale Hinterschneidung vertikal verschiebbar ist. In dieser Weise kann z.B. ein medizinisches Personal leicht die Höhe der Klemmschiene verstellen, ohne diese vollständig von dem Wagen abnehmen zu müssen.

Es ist besonders vorteilhaft, dass das Spannelement ein Hebelelement aufweist, wobei ein Hebelarm des Hebelelements einen Vorsprung aufweist, der in die vertikale Hinterschneidung eingreift und formschlüssig mit dem Eckprofil verbindbar ist.

Erfindungsgemäß sind hierbei die Hinterschneidungen an den Eckprofilen an dem Pflege- bzw. Organisationswagen frei von vorgegebenen Rastpositionen. Somit kann die Klemmschiene an einer beliebigen Höhe stufenlos im Eckprofil fixiert werden. Wenn z.B. ein Tablett als Zubehör angebracht wird, läßt sich dieses dergestalt in eine Höhenposition bringen, dass es z.B. mit einem angrenzenden Tisch fluchtet.

Erfindungsgemäß können zur Anbringung von mehreren Gegenständen gleichzeitig mehrere Klemmschienen übereinander an dem Pflege- bzw. Organisationswagen fixiert werden. Jede Klemmschiene wird dazu in einer unterschiedlichen Höhe an dem Wagen anmontiert. Zur Bestimmung der vertikalen Abstände zwischen den Klemmschienen ist der Abmessung des Zubehörs, insbesondere seiner Höhe, Rechnung zu tragen.

In einer bevorzugten Ausführungsform ist es vorgesehen, dass das Spannelement ein Hebelelement aufweist, wobei ein Hebelarm des Hebelelements einen Vorsprung aufweist, der in die vertikale Hinterschneidung eingreift und formschlüssig mit dem Eckprofil verbindbar ist.

Die Anbringung der Klemmschiene an dem Pflege- bzw. Organisationswagen erfolgt erfindungsgemäß bevorzugt ohne die Hilfe eines Werkzeugs. Bei der Anbringung wird zunächst das Gegenhaltelement der Klemmschiene, das insbesondere ein Umgreifelement aufweist, die entsprechenden Stelle des benachbarten Eckprofils umgreift. Dann verschwenkt z.B. der Bediener den Hebelarm des Spannelements, bis der Vorsprung des Hebelarms in die Hinterschneidung vollständig eingreift und dort formschlüssig fixiert ist.

Es ist besonders vorteilhaft, die Klemmschienen auf diese Art und Weise an demem Pflege- bzw. Organisationswagen anzubringen. Falls bereits eine Schiene an dem Wagen befestigt ist, kann eine weitere Schiene nach Belieben an einer anderen Höhe angebracht werden. Somit kann weiteres Zubehör sicher verwahrt werden.

In vorteilhafter Ausgestaltung des Pflege- bzw. Organisationswagens ist es vorgesehen, dass eine Klemmschiene an dem Pflege- bzw. Organisationswagen befestigt ist und als Aufhängebasis für Zubehör, als Handgriff und/oder als Abstandshalter ausgebildet ist.

In einer weiteren bevorzugten Ausführungsform ist es vorgesehen, dass das Hebelelement ein zweiarmiger Kniehebel ist, der sich beim Eingreifen des Vorsprungs in die Hinterschneidung über den Totpunkt des Kniehebels erstreckt.

Um den Totpunkt des Kniehebels zu überwinden, ist eine relativ große Kraft für die Betätigung des Kniehebels erforderlich. Dies ist gegen ein versehentliches Anstoßen an der Klemmschiene, welches zur Abfallen der Klemmschiene vom Wagen führen könnte, besonders vorteilhaft, da in dieser Ausführungsform der Kniehebel lediglich mit deutlich mehr Kraft von der Hinterschneidung losgelöst werden kann. Damit ist eine bessere Fixierung der Klemmschiene an dem Wagen möglich.

In einer weiteren bevorzugten Ausführungsform ist es vorgesehen, dass das Spannelement einen Exzenter aufweist, der beim Eingreifen in die Hinterschneidung auch über seinen Totpunkt bleibt. Die exzentrische Fixierung des Spannelements an der Klemmschiene begünstigt zudem den Schutz gegen versehentliches Loslösen. Somit ist diese Ausführungsform bei anderen Anwendungsfällen ebenso vorteilhaft wie die Ausführungsform mit einem Kniehebel.

In einer weiteren bevorzugten Ausführungsform ist es vorgesehen, dass der Exzenter an der dem Wagen zugewandten Seite eine vertikale Abflachung - auch als Äquipotentialfläche zu bezeichnen - aufweist, wodurch das Loslösen der Klemmschiene in zwei Schritten erfolgen kann. Zuerst muss das Spannelement aus der Ausgangslage, der Befestigung an dem Pflege- bzw. Organisationswagen, teilweise gelöst und in eine Mittelposition gebracht werden. In diesem Zustand ist ein vertikales Verschieben der Klemmschiene möglich.

Es ist vorteilhaft, das Spannelement so zu formen, dass bei Loslassen des Spannelements das Spannelement wieder in die Ausgangslage zurückschnappt. Somit ist die Fixierung an dem Pflege- bzw. Organisationswagen gesichert. Von der Mittelposition des Spannelementes kann es zudem weiter gelöst werden, um die Klemmschiene von dem Pflege- bzw. Organisationswagen zu entfernen.

In einer weiteren bevorzugten Ausführungsform ist es vorgesehen, dass der Vorsprung als Feder in die vertikale Hinterschneidung des Eckprofils des Pflege- bzw. Organisationswagens als Nut steckbar ist.

Da die Feder-Nut-Verbindung gegenüber einer allgemeinen Vorsprungs-Hinterschneidungs-Verbindung einen besseren Formschluß hat, wird erfindungsgemäß die Fixierung der Klemmschiene an dem Wagen verbessert.

In einer weiteren bevorzugten Ausführungsform ist es vorgesehen, dass der Querschnitt der Nut im Wesentlichen V-förmig ist und insofern einen Winkel bildet, der einen Wert zwischen 10° und 70°, insbesondere etwa 45°, hat.

Es ist mit der V-förmigen Nut mit einem Winkel von 45° besonders vorteilhaft, dass das diese Nut aufweisende Eckprofil nicht nur für eine seitliche Anbringung der Klemmschiene möglich ist. Dieses ist vielmehr auch geeignet für eine vorderen/hinteren Anbringung der Klemmschiene. Insbesondere können die Hinterschneidungen der Eckprofile bei einem Winkel von 45° wahlweise zum vorderen/hinteren, aber auch zum seitlichen Anbringen von Klemmschienen je unabhängig voneinander genutzt werden. Lediglich die exakte gleiche Höhenposition von über Eck benachbarten Klemmschienen verbietet sich, ist aber in aller Regel auch nicht erwünscht.

In einer weiteren bevorzugten Ausführungsform ist es vorgesehen, dass das Spannelement und das Gegenhaltelement Gussteile sind. Gussteile sind relativ formtreu und bieten erfindungsgemäß eine stabile Verbindung mit dem Wagen.

Der Verbindungsbügel ist bevorzugt ein Hohlprofil, insbesondere aus Leichtmetall. Damit ist ein ausreichend fester Bügel vorgesehen, und zugleich ist das Gewicht der Klemmschiene möglichst klein, um ihre Tragfähigkeit zu optimieren. Der Querschnitt des Verbindungsbügels ist ein hochkant stehendes Hohlprofil, das zur Aufbringung bzw. Anbringung von Zubehör geeignet ist.

In einer weiteren bevorzugten Ausführungsform ist es vorgesehen, dass mit einem längeren Verbindungsbügel, dessen Länge insbesondere das 1,1-fache bis 2-fache oder das 0,3-fache bis 0,9-fache der Länge des Verbindungsbügels zur seitlichen Anbringung beträgt, die Klemmschiene vorne und/oder hinten an dem Pflege- bzw. Organisationswagen anbringbar ist.

Besonders bevorzugt ist die Anbringung der Klemmschiene hinten an dem Wagen, da vorne in der Regel mindestens eine Tür bzw. Schublade vorgesehen ist, über die z.B. die Medikalprodukte innerhalb des Wagens zugänglich sind und die daher häufig geöffnet werden könnte.

In einer weiteren bevorzugten Ausführungsform ist es vorgesehen, dass zwei bis vier Klemmschienen gleichzeitig jeweils an einer der seitlichen, vorderen und hinteren Seiten des Pflege- bzw. Organisationswagens anbringbar sind.

Damit ist es möglich, mehr Zubehör gleichzeitig zu tragen. Mit der beiderseitigen Anbringung von Klemmschienen mit Zubehör ist der Wagen auch besser ausbalanciert.

Es ist besonders bevorzugt in dieser Ausführungsform, dass identische Gussteile für die jeweiligen Spannelemente und identische Gussteile für die jeweiligen Gegenhaltelemente eingesetzt werden.

In einer weiteren bevorzugten Ausführungsform ist es vorgesehen, dass die Klemmschiene als Griff vorgesehen ist, welcher insbesondere vorteilhaft in Zusammenarbeit mit dem Wagen mit Universalrädern ist. Das medizinische Personal kann dann den Wagen mit dem Griff leicht schieben bzw. ziehen. Dies ist insbesondere bei der Fixierung mehrerer Klemmschienen von Vorteil. Diese lassen sich an z.B. drei Seiten des Wagens anbringen, idealerweise hierbei nicht an der Bedienerseite des Wagens, um einen einfachen Zugriff auf das Transportgut zu gewährleisten.

In einer weiteren bevorzugten Ausführungsform ist es vorgesehen, dass der Vorsprung des Spannelements in eine Hinterschneidung eines hinteren Eckprofils des Pflege- bzw. Organisationswagens eingreift und das Umgreifelement des Gegenhaltelements das benachbarte vordere Eckprofil umgreift.

Das Spannelement der Klemmschiene erstreckt sich an der Eingreifseite des Wagens und könnte mit der vorderen Tür des Wagens kollidieren. Durch die Anordnung des Spannelements in einer Hinterschneidung eines hinteren Eckprofils wird dies erfindungsgemäß vermieden.

In einer weiteren bevorzugten Ausführungsform ist es vorgesehen, dass an der Kontaktfläche des Vorsprungs des Spannelements zu der Hinterschneidung des entsprechenden Eckprofils und/oder an der Kontaktfläche des Umgreifelements des Gegenhaltelements zu dem entsprechenden Eckprofil eine Schicht aus einem Antirutsch-Material vorgesehen ist, deren Stärke zwischen 0,1 mm und 5 mm, insbesondere 1 mm, beträgt.

Mit der Antirutsch-Schicht wird die Montage der Klemmschiene bezüglich der Genauigkeit verbessert.

Außerdem wird dadurch die Befestigung der Klemmschiene am Wagen gesichert. Wenn bei der Einsetzung des Wagens Temperaturschwankungen bestehen, dehnen sich die Gussteile und die Eckprofile wegen ihrer unterschiedlichen Wärmeausdehnungskoeffizienten in unterschiedlichem Maße aus, was zu einer Rutschgefahr führen könnte.

Wenn Exemplarstreuungen der Eckprofile und/oder der Klemmschiene nicht unberücksichtigt werden können, verstärkt auch die Antirutsch-Schicht die Befestigung der Klemmschiene.

Falls bei der Verwendung des Wagens die Eckprofile feucht wurden oder versehentlich Verunreinigungen an den Eckprofilen bestehen, ermöglicht die Antirutsch-Schicht eine gute Adhäsion der Klemmschiene am Wagen.

Somit ist es besonders vorteilhaft, dass eine verwendeten Klemmschiene aufgrund der vielen verschiedenen vertikalen Befestigungsoptionen vielseitig genutzt werden kann. Die Schiene kann als Handgriff zum Steuern des Wagens, als Abstandshalter zwischen mehreren Pflege- bzw. Organisationswägen, zum Schutz des Transportguts und des Lagerguts des Wagens, als Stoßdämpfer bei Kollisionen und/oder als Aufhängebasis für Zubehör wie .B. Desinfektionsflaschen genutzt werden kann.

Weitere Vorteile, Einzelheiten und Merkmale ergeben sich aus der nachfolgenden Beschreibung eines Ausführungsbeispiels der Erfindung anhand der Zeichnungen:

Es zeigen:
- Fig. 1: eine schematisch dargestellte Ausführungsform des erfindungsgemäßen Pflege- bzw. Organisationswagens mit einer gelösten Klemmschiene;
- Fig. 2: die schematisch dargestellte Ausführungsform des erfindungsgemäßen Pflege- bzw. Organisationswagens gemäß Fig. 1 mit der seitlich fixierten Klemmschiene;
- Fig. 3: einen vergrößerten Teil der schematisch dargestellten Ausführungsform des erfindungsgemäßen Pflege- bzw. Organisationswagens gemäß Fig. 2;
- Fig. 4: einen weiteren vergrößerten Teil der schematisch dargestellten Ausführungsform des erfindungsgemäßen Pflege- bzw. Organisationswagens gemäß Fig. 2; und
- Fig. 5: einen weiteren vergrößerten Teil der schematisch dargestellten Ausführungsform des erfindungsgemäßen Pflege- bzw. Organisationswagens gemäß Fig. 2 mit einem Zubehörhalter.

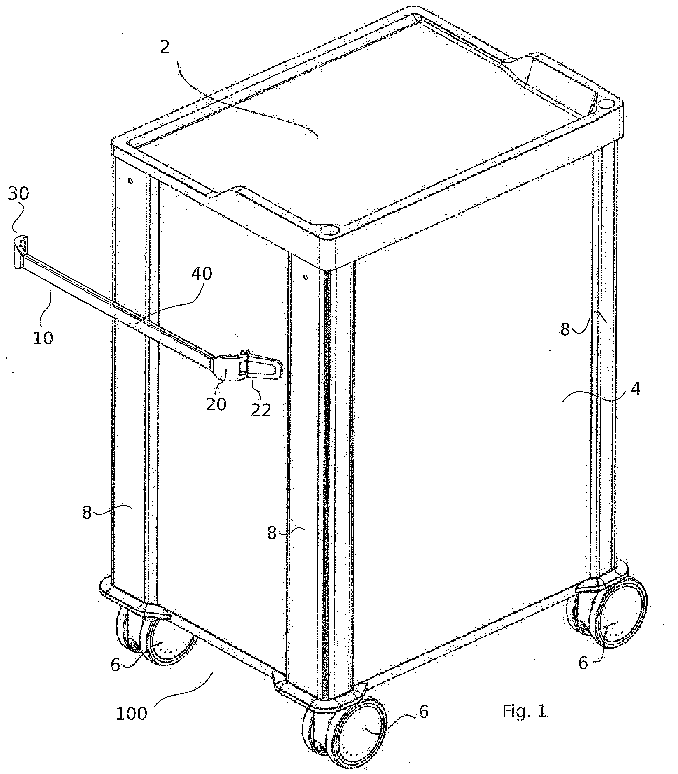

Der in Fig. 1 dargestellte erfindungsgemäße Pflege- bzw. Organisationswagen 100 weist einen Wagenkörper 4 in Form eines geraden Prismas, eine Arbeitsplatte 2 auf dem Wagenkörper 4 sowie vier Räder 6 auf. Der Wagenkörper 4 ist in der Draufsicht rechteckig mit leicht abgerundeten Ecken vorgesehen und weist vier Eckprofile 8 auf, die sich an den vertikalen Kanten des Wagenkörpers 4 erstrecken und durch Strangpressverfahren hergestellt sind.

Die Klemmschiene 10 ist gemäß Fig. 1 in einem vom Pflege- bzw. Organisationswagen 100 abgetrennten Zustand und weist ein Spannelement 20, ein Gegenhaltelement 30 und einen Verbindungsbügel 40 auf, der das Spannelement 20 mit dem Gegenhaltelement 30 verbindet.

Das Spannelement 20 und das Gegenhaltelement 30 sind Gussteile, welche relativ formtreu sind und erfindungsgemäß eine stabile Verbindung mit dem Wagen 100 bieten. Der Verbindungsbügel 40 ist ein Hohlprofil aus Leichtmetall. Damit ist ein ausreichend fester Bügel vorgesehen, und zugleich ist das Gewicht der Klemmschiene 10 möglichst klein, um ihre Tragfähigkeit zu optimieren.

Das Spannelement 20 gemäß der in Fig. 1 dargestellten Ausführungsform weist ein Hebelelement, und zwar einen Kniehebel 22 auf.

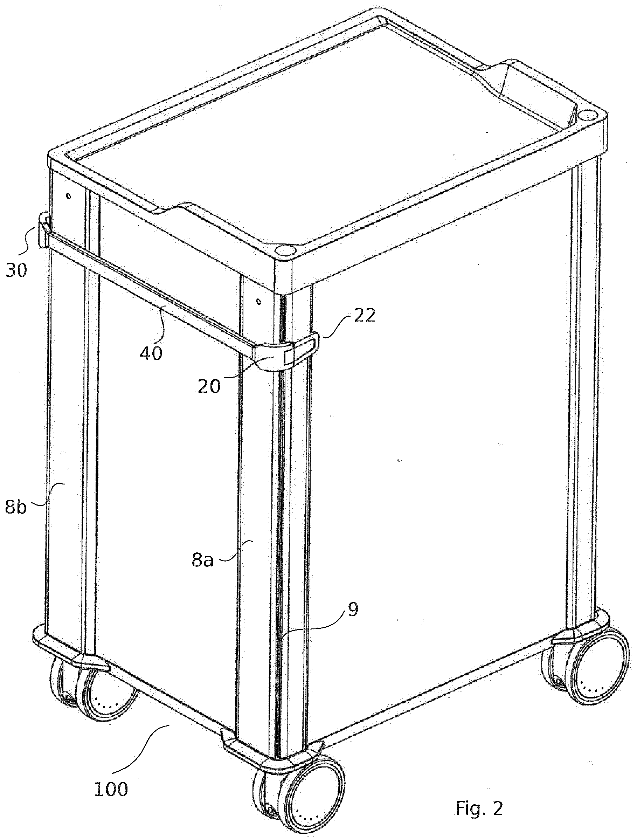

Gemäß Fig. 2 ist die Klemmschiene 10 seitlich an dem Pflege- bzw. Organisationswagen 100 fixiert. Ein Eckprofil 8a weist dazu eine sich vertikal erstreckende Hinterschneidung 9 auf, die sich bis zur Arbeitsplatte 2 erstreckt. Der Kniehebel 22 weist einen Vorsprung auf, der in die vertikalen Hinterschneidung 9 eingreift. Mittlerweile greift das Gegenhaltelement 30 eine horizontal entsprechende Stelle des benachbarten Eckenprofils 8b um. In dieser Weise ist die Klemmschiene 10 formschlüssig mit dem Wagenkörper 4 verbunden.

Mit der formschlüssigen Verbindung ergibt sich eine recht große Reibungskraft an der Kontaktfläche zwischen der Klemmschiene 10 und dem Wagenkörper 4. Erfindungsgemäß kann Zubehör mit dem Gewicht bis 10 kg ohne Rutschgefahr sicher an dem Pflege- bzw. Organisationswagen 100 angehängt werden.

Nach dem Lösen des Kniehebels 22 wird die Klemmschiene 10 vom Wagen 100 abgetrennt, und sie kann bei Bedarf in einer unterschiedlichen Höhe am Wagen 100 wieder fixiert werden.

Erfindungsgemäß ist besonders vorteilhaft, dass beim teilweisen Lösen des Kniehebels 22 die Klemmschiene 10 in der vertikalen Hinterschneidung 9 vertikal verschiebbar ist. In dieser Weise kann z.B. medizinisches Personal leicht die Höhe der Klemmschiene 10 verstellen, ohne diese vollständig von dem Wagen 100 abnehmen zu müssen.

Falls z.B. zur Lagerung einer Mehrzahl der Pflege- bzw. Organisationswägen 100 diese aneinanderzureihen sind, können erfindungsgemäß zunächst die Klemmschienen 10 leicht abgenommen werden - wie der Zustand in Fig. 1 dargestellt, welche Klemmschienen auch dann für die Wiederverwendung in den Wägen gelegt werden könnten. Die erfindungsgemäßen Hinterschneidungen 9 an den Eckprofilen 8a beeinflussen nicht die Aneinanderreihung der Wägen 100, sondern können erfindungsgemäß als Referenzlinie für die Ausrichtung der Wägen 100 dienen.

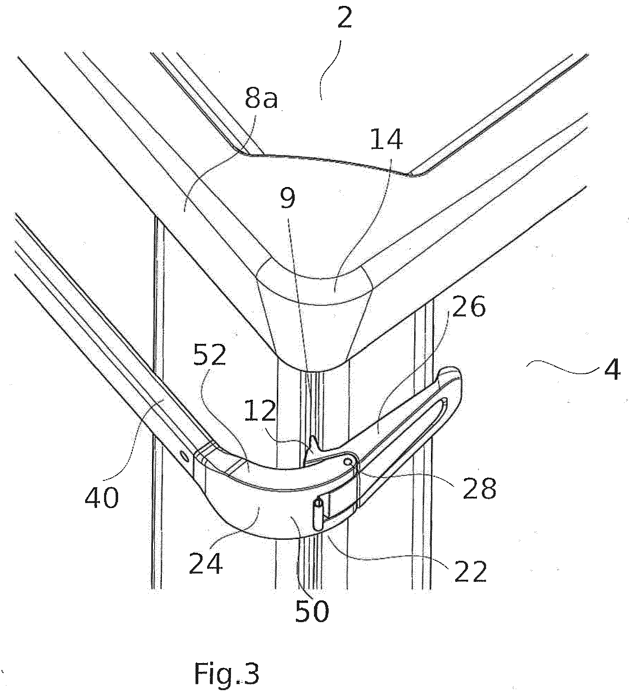

In Fig. 3 ist die formschlüssige Verbindung ersichtlich. Der Kniehebel 22 ist zweiarmig und erstreckt sich in dem fixierten Zustand über seinen Totpunkt. Zur Lösung der Klemmschiene 10 muss der Totpunkt des Kniehebels 22 überwunden werden, was eine relativ große Kraft auf den Kniehebel 22 voraussetzt.

Dies ist beispielsweise gegen ein versehentliches Anstoßen an der Klemmschiene 10, welches zur Abtrennung der Klemmschiene 10 vom Wagen 100 führen könnte, besonders vorteilhaft, da der Kniehebel 22 lediglich mit deutlich mehr Kraft von der Hinterschneidung 9 gelöst werden kann. Damit ist eine bessere Fixierung der Klemmschiene 10 an dem Wagen 100 möglich.

Der Kniehebel 22 weist einen Festteil 24 und einen Schwenkteil 26 auf, welcher über ein Gelenk 28 mit dem Festteil 24 verbunden ist. Der Schwenkteil 26 weist die beiden Arme des Kniehebels 22 auf, und der dem Festteil 24 benachbarte Arm weist den Vorsprung 12 auf, der in die Hinterschneidung 9 eingreift. Beim Festklemmen des Kniehebels 22 lehnt die Basisfläche des dem Festteil benachbarten Arms sich an dem Festteil 24 an, und eine Endfläche des Schwenkteils 26 lehnt sich an das Eckprofil 8a an.

Der Festteil 24 weist eine Abkröpfung 50 auf, die einem Winkel von etwa 90° entspricht. Der Festteil 24 hat im Wesentlichen eine gleiche Dicke wie der Verbindungsbügel 40. Der Festteil 24 ist an dem von dem Verbindungsbügel 40 entfernteren Ende vertikal breiter als der Verbindungsbügel 40 und hat an dem dem Verbindungsbügel näheren Ende eine gleiche Breite wie der Verbindungsbügel 40. Zwischen den beiden Enden des Festteils 24 ist eine schräge Fläche 52 vorgesehen.

In Fig. 3 ist eine leicht abgerundete Eckenkurve 14 ersichtlich. Die Hinterschneidung 9 des Eckprofils 8a ist in der Draufsicht im Bereich der Mitte der abgerundeten Eckenkurve 14 vorgesehen. Erfindungsgemäß wird diese Hinterschneidung 9 auch zur hinteren Fixierung einer längeren Klemmschiene an dem Wagen 100 verwendet.

An dem Vorsprung 12 ist an seiner dem Festteil 24 eher zugewandten Seite eine kleine vertikale Nut angedeutet. Diese wirkt mit einer entsprechend geformten Gegenfläche des Eckprofils 8 zusammen und bildet eine Äquipotentialfläche zur Bereitstellung einer Mittelposition. In dieser ist der Kniehebel 22 nur halb gelöst, und die Klemmschiene 8 lässt sich vertikal verschieben.

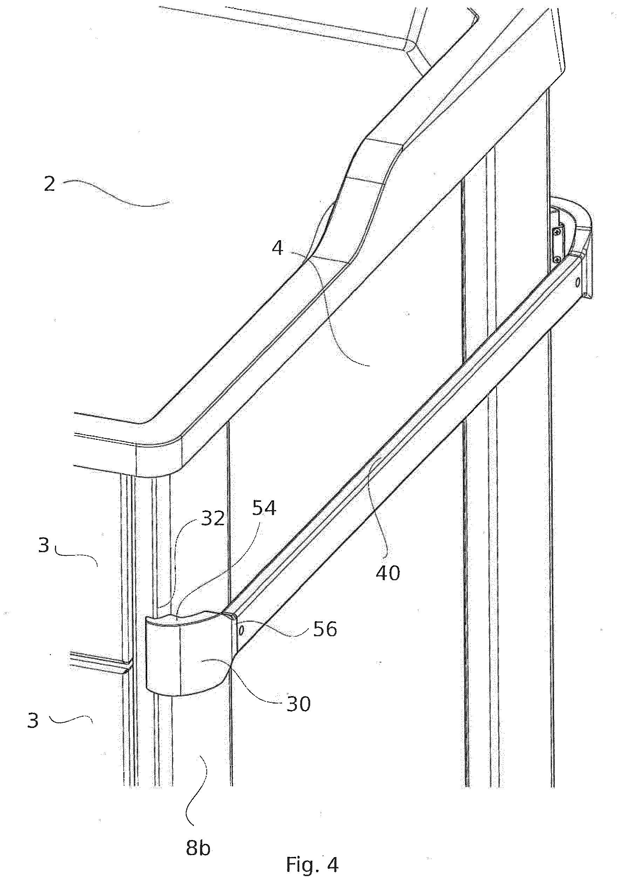

In Fig. 4 ist das Gegenhaltelement 30 ersichtlich. Das Gegenhaltelement 30 weist ein Umgreifelement 32 mit einer Abkröpfung auf, das die entsprechenden Stelle des dem Eckprofil 8a, welches die Hinterschneidung 9 aufweist, benachbarten Eckprofils 8b umgreift. Gemäß der dargestellten Ausführungsform des Wagens 100 sind an dem Eckprofil 8b an der vorderen Seite des Wagens drei Schubladen 3 vorgesehen, über die Medikalprodukte innerhalb des Wagens 100 zugänglich sind und die daher häufig geöffnet werden könnten. Durch die Anordnung, dass das Gegenhaltelement 30 an dem vorderen Eckprofil 8b und das Spannelement 20, welches - wie in Fig. 3 ersichtlich - über das Eckprofil 8a hinausragt, an dem hinteren Eckprofil 8a angebracht werden, beeinflusst die Fixierung der Klemmschiene 10 am Wagen 100 erfindungsgemäß die Öffnung keiner der Schubladen 3.

Das Gegenhaltelement 30 weist - wie der Kniehebel 22 - eine Abkröpfung 54 auf, die einem Winkel von etwa 90° entspricht. Das Gegenhaltelement 30 hat im Wesentlichen eine gleiche Dicke wie der Verbindungsbügel 40 und ist an dem von dem Verbindungsbügel 40 entfernteren Ende vertikal breiter als der Verbindungsbügel 40 und hat an dem dem Verbindungsbügel 40 näheren Ende eine gleiche Breite wie der Verbindungsbügel 40. Zwischen den beiden Enden des Gegenhaltelements 30 ist eine schräge Fläche 56 vorgesehen.

Mit einem endseitig vertikal breiten Spannelement und einem endseitig vertikal breiten Gegenhaltelement wird erfindungsgemäß bei der Montage der Klemmschiene am Wagen eine versehentliche Verkantung dieser vermieden. Insofern wird die Horizontalität der Klemmschiene am Wagen gewährleistet.

Erfindungsgemäß ist vorgesehen, dass die Fixierung der Klemmschiene 10 am Wagen 100 und die Abtrennung dieser ohne die Hilfe eines Werkzeugs erfolgt. Das medizinische Personal lässt zunächst das Gegenelement 30 eine passende Stelle des Eckprofils 8b umgreifen. Dann verschwenkt der Bediener den Schwenkteil 26 des Kniehebels 22, bis der Vorsprung 12 des Spannelements 20 über den Totpunkt des Kniehebels 22 fest in die Hinterschneidung 9 des Eckprofils 8a eingreift. Zur Abtrennung der Klemmschiene 10 verschwenkt der Bediener den Schwenkteil 26 in umgekehrter Richtung, mit einer ausreichend großen Kraft zur Überwindung des Totpunkts des Kniehebels 22.

Der Verbindungsbügel 40 ist durch Verbindungselemente wie Stahlstifte mit dem Spannelement 20 und dem Gegenhaltelement 30 verbunden; dies ist nicht in Fig. 3 oder Fig. 4 ersichtlich.

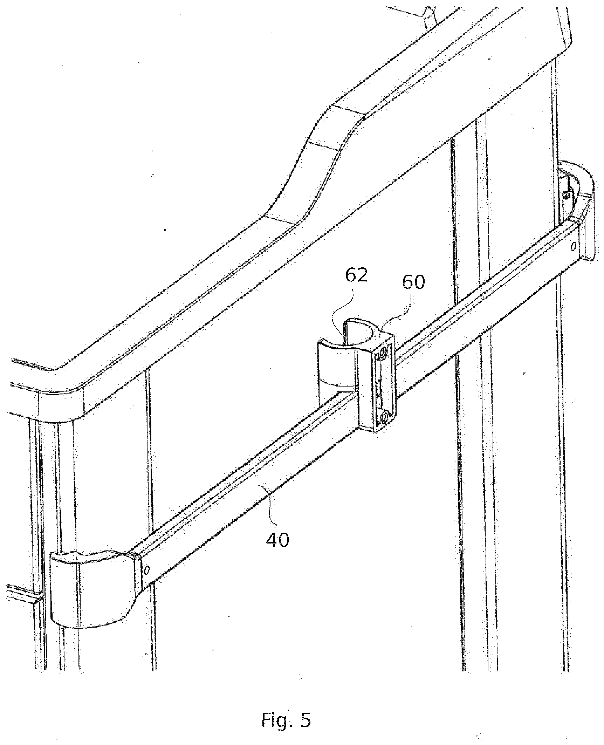

Gemäß Fig. 5 klemmt ein Zubehörhalter 60 den Verbindungsbügel 40 an. Der Zubehörhalter 60 weist eine Aussparung 62 zur Aufnahme von Zubehör wie etwa einer Flasche Desinfektionsmittel auf. Der Zubehörhalter 60 ist auf dem Verbindungsbügel 40 horizontal verschiebbar.

Der Querschnitt des Verbindungsbügels 40 ist ein hochkant stehendes Hohlprofil, das zur Aufbringung bzw. Anbringung von Zubehör bzw. Zubehörhaltern geeignet ist.

In einer nicht dargestellten Ausführungsform ist es vorgesehen, dass sich an dem Spannelement 20 und an dem Gegenhaltelement 30 jeweils eine Nut, die die Breite des Verbindungsbügels 40 andeutet, dem Verbindungsbügel 40 benachbart erstreckt.

## Patentansprüche

1. Pflege- bzw. Organisationswagen (100) mit einer Klemmschiene (10) zur Anbringung von Zubehör an dem Pflege- bzw. Organisationswagen (100), wobei
- der Pflege- bzw. Organisationswagen (100) Eckprofile (8, 8a, 8b) aufweist, von denen mindestens eines eine sich vertikal erstreckende Hinterschneidung (9) aufweist,
- die Klemmschiene (10) ein Spannelement (20), ein Gegenhaltelement (30) und einen Verbindungsbügel (40) aufweist, der das Spannelement (20) mit dem Gegenhaltelement (30) verbindet und an dem das Zubehör anhängbar oder aufhängbar ist,
- das Spannelement (20) an der vertikalen Hinterschneidung (9) formschlüssig mit dem Eckprofil (8a) verbindbar ist,
- die Klemmschiene (10) durch das Spannelement (20) an dem Pflege- bzw. Organisationswagen (100) fixierbar und von diesem lösbar ist, und
- die Klemmschiene (10) vertikal stufenlos verschiebbar und an einer beliebigen Stelle der vertikalen Hinterschneidung (9) und an einer dieser Stelle horizontal entsprechenden Stelle eines benachbarten Eckprofils (8b) fixierbar ist,
**dadurch gekennzeichnet, dass**
das Spannelement (20) ein Hebelelement aufweist, wobei ein Hebelarm des Hebelelements einen Vorsprung (12) aufweist, der in die vertikale Hinterschneidung (9) eingreift und formschlüssig mit dem Eckprofil (8a) verbindbar ist.

2. Pflege- bzw. Organisationswagen nach Anspruch 1, **dadurch gekennzeichnet, dass** der Vorsprung (12) als Feder in die vertikale Hinterschneidung (9) des Eckprofils (8a) des Pflege- bzw. Organisationswagens als Nut steckbar ist, und/oder dass der Querschnitt der Nut im Wesentlichen V-förmig ist und einen Winkel bildet, der einen Wert zwischen 10o und 70o, insbesondere etwa 45o, hat.

3. Pflege- bzw. Organisationswagen nach einem der vorhergehenden Ansprüche, **dadurch gekennzeichnet, dass** das Gegenhaltelement (30) ein Umgreifelement (32), insbesondere eine Abkröpfung, aufweist, das die horizontal entsprechende Stelle des benachbarten Eckprofils (8b) umgreift.

4. Pflege- bzw. Organisationswagen nach einem der vorhergehenden Ansprüche, **dadurch gekennzeichnet, dass** beim mindestens teilweisen Lösen des Spannelements (20) die Klemmschiene (10) in der vertikalen Hinterschneidung (9) vertikal verschiebbar ist.

5. Pflege- bzw. Organisationswagen nach einem der vorhergehenden Ansprüche, **dadurch gekennzeichnet, dass** das Hebelelement ein zweiarmiger Kniehebel (22) ist, der sich beim Eingreifen des Vorsprungs (12) in die Hinterschneidung (9) über den Totpunkt des Kniehebels (22) erstreckt, und/oder dass das Spannelement (20) einen Exzenter aufweist.

6. Pflege- bzw. Organisationswagen nach Anspruch 5, **dadurch gekennzeichnet, dass** der Kniehebel (22) einen Festteil (24) und einen Schwenkteil (26) aufweist, welcher über ein Gelenk (28) mit dem Festteil (24) verbunden ist, wobei der Schwenkteil (26) die beiden Arme des Kniehebels (22) aufweist, und wobei der dem Festteil (24) benachbarte Arm den Vorsprung (12) aufweist, und/oder dass beim Festklemmen des Spannelements (20) die Basisfläche des dem Festteil (24) benachbarten Arms sich an dem Festteil (24) anlehnt und/oder eine Endfläche des Schwenkteils (26) sich an das Eckprofil (8a) oder eine dieser benachbarten Wand anlehnt.

7. Pflege- bzw. Organisationswagen nach einem der vorhergehenden Ansprüche, **dadurch gekennzeichnet, dass** das Spannelement (20) und das Gegenhaltelement (30) Gussteile sind und der Verbindungsbügel (40) ein Hohlprofil, insbesondere aus Leichtmetall, ist, und/oder dass die Eckprofile (8, 8a, 8b) durch Strangpressverfahren hergestellt sind, und/oder dass der Querschnitt des Verbindungsbügels (40) ein hochkant stehendes Hohlprofil ist.

8. Pflege- bzw. Organisationswagen nach einem der vorhergehenden Ansprüche, **dadurch gekennzeichnet, dass** in der Draufsicht die Hinterschneidung (9) des Eckprofils (8a) im Bereich der Mitte der abgerundeten Eckenkurve (14) vorgesehen ist und sich vertikal zumindest über einen Teil der Höhe des Pflege- bzw. Organisatioriswagens (100) erstreckt.

9. Pflege- bzw. Organisationswagen nach einem der vorherigen Ansprüche **dadurch gekennzeichnet, dass** sich die Hinterschneidung (9) des Eckprofils (8a) vertikal über mindestens 50%, bevorzugt mindestens 80%, insbesondere mehr als 90% der Höhe des Wagens erstreckt und/oder dass die Hinterschneidung symmetrisch zu ihrer vertikalen Mittenachse ausgebildet ist und insbesondere wahlweise ein Einhängen der Spannelements (20) der Klemmschiene (10) dergestalt ermöglicht, dass der Verbindungsbügel (40) der Klemmschiene (10) - von der Hinterschneidung (9) aus gesehen - entweder zu der einen oder zu der anderen horizontalen Seite weist.

10. Pflege- bzw. Organisationswagen nach einem der vorhergehenden Ansprüche, **dadurch gekennzeichnet, dass** die Klemmschiene (10) in longitudinaler Richtung endseitig an dem Spannelement (20) und dem Gegenhaltelement (30) zwei Abkröpfungen (50) aufweist, die je einen Abkröpfwinkel zwischen 30o und 120o aufweisen.

11. Pflege- bzw. Organisationswagen nach einem der vorhergehenden Ansprüche, **dadurch gekennzeichnet, dass** die Klemmschiene (10) wahlweise seitlich an einer der beiden Seiten des Pflege- bzw. Organisationswagens (100) anbringbar ist, und/oder dass mit einem längeren Verbindungsbügel (40), dessen Länge insbesondere das 1,1-fache bis 2-fache oder das 0,3-fache bis 0,9-fache der Länge des Verbindungsbügels (40) zur seitlichen Anbringung beträgt, die Klemmschiene (10) vorne und/oder hinten an dem Pflege- bzw. Organisationswagen (100) anbringbar ist, und/oder dass zwei bis vier Klemmschienen (10) gleichzeitig jeweils an einer der seitlichen, vorderen und hinteren Seite des Pflege- bzw. Organisationswagens (100) anbringbar sind.

12. Pflege- bzw. Organisationswagen nach einem der vorhergehenden Ansprüche, **dadurch gekennzeichnet, dass** der Vorsprung (12) des Spannelements (20) in eine Hinterschneidung (9) eines hinteren Eckprofils (8a) des Pflege- bzw. Organisationswagens eingreift und das Umgreifelement (32) des Gegenhaltelements (30) das benachbarte vordere Eckprofil (8b) umgreift.

13. Pflege- bzw. Organisationswagen nach einem der vorhergehenden Ansprüche, **dadurch gekennzeichnet, dass** das Spannelement (20) und das Gegenhaltelement (30) im Wesentlichen eine gleiche Dicke wie der Verbindungsbügel (40) haben, und dass das Spannelement (20) und das Gegenhaltelement (30) an dem von dem Verbindungsbügel (40) entfernteren Ende vertikal breiter als der Verbindungsbügel (40) sind und an dem dem Verbindungsbügel (40) näheren Ende eine gleiche Breite wie der Verbindungsbügel (40) haben, insbesondere zur Gewährleistung der Horizontalität der Klemmschiene (10), wobei zwischen den beiden Enden des Spannelements und des Gegenhaltelements (20) jeweils eine schräge Fläche (56) vorgesehen ist.

## Claims

1. A medical or organisation cart (100) with a clamping rail (10) for attaching accessories at the medical or organisation cart (100), wherein
- the medical or organisation cart (100) is provided with corner profiles (8, 8a, 8b) among which at least one is provided with a vertically extending undercut (9),
- the clamping rail (10) is provided with a tension element (20), a counter hold element (30) and a connection strap (40) which connects the tension element (20) with the counter hold element (30) and which the accessories may be attached to or hanged on,
- the tension element (20) may be positively connected with the corner profile (8a) at the vertical undercut (9),
- the clamping rail (10) may be fixedly attached to the medical or organisation cart (100) and may be detached from said, both with the help of the tension element (20), and
- the clamping rail (10) may be displaced vertically in an infinitely variable fashion and may be fixedly attached at any position of the vertical undercut (9) and at a position of an adjacent corner profile (8b) which horizontally corresponds to said first position,
**characterized in that**
the tension element (20) is provided with a lever element, wherein a lever arm of the lever element is provided with a projection (12) which engages with the vertical undercut (9) and may be positively connected with the corner profile (8a).

2. The medical or organisation cart according to Claim 1, **characterized in that** the projection (12) may be plugged, as the tongue, into the vertical undercut (9) of the corner profile (8a) of the medical or organisation cart, as the groove, and/or that the cross section of the groove is essentially V-shaped and forms an angle which has a value of between 10° and 70°, in particular approximately 45°.

3. The medical or organisation cart according to one of the previous Claims, **characterized in that** the counter hold element (30) is provided with an encompassing element (32), in particular an offset, which encompasses the horizontally corresponding position of the adjacent corner profile (8b).

4. The medical or organisation cart according to one of the previous Claims, **characterized in that**, when the tension element (20) is at least partly detached, the clamping rail (10) may be vertically displaced inside the vertical undercut (9).

5. The medical or organisation cart according to one of the previous Claims, **characterized in that** the lever element is a two-armed knee lever (22) which extends over the dead-centre position of the knee lever (22) when the projection (12) engages with the undercut (9), and/or that the tension element (20) is provided with an eccentric.

6. The medical or organisation cart according to Claim 5, **characterized in that** the knee lever (22) is provided with a stationary part (24) and a swivel part (26) which is connected with the stationary part (24) via a joint (28), wherein the swivel part (26) comprises the two arms of the knee lever (22), and wherein the arm which is adjacent to the stationary part (24) comprises the projection (12), and/or that when the tension element (20) is clamped tightly, the base of the arm which is adjacent to the stationary part (24) leans against the stationary part (24) and/or an end surface of the swivel part (26) leans against the corner profile (8a) or to a wall adjacent to said.

7. The medical or organisation cart according to one of the previous Claims, **characterized in that** the tension element (20) and the counter hold element (30) are cast parts and the connection strap (40) is a hollow profile, in particular made out of a light metal, and/or that the corner profiles (8, 8a, 8b) are manufactured by means of extrusion-moulding processes, and/or that the cross section of the connection strap (40) is an upright standing hollow profile.

8. The medical or organisation cart according to one of the previous Claims, **characterized in that**, when viewed from above, the undercut (9) of the corner profile (8a) is provided in the region of the centre of the rounded corner curve (14) and extends vertically over at least a part of the height of the medical or organisation cart (100).

9. The medical or organisation cart according to one of the previous Claims, **characterized in that** the undercut (9) of the corner profile (8a) extends vertically over at least 50 %, preferably at least 80 %, in particular more than 90 %, of the height of the cart and/or that the undercut is provided symmetrically to its vertical central axis and in particular makes it possible to optionally mount the tension element (20) of the clamping rail (10) in such a fashion that the connection strap (40) of the clamping rail (10) - viewed from the undercut (9) - faces either towards the one or towards the other horizontal side.

10. The medical or organisation cart according to one of the previous Claims, **characterized in that** the clamping rail (10) is provided with two offsets (50) in the longitudinal direction at the end sides at the tension element (20) and the counter hold element (30), which offsets each comprise an offset angle of between 30° and 120°.

11. The medical or organisation cart according to one of the previous Claims, **characterized in that** the clamping rail (10) may optionally be attached laterally at one of the two sides of the medical or organisation cart (100), and/or that, with the help of a longer connection strap (40), whose length amounts in particular to the 1.1 -fold to 2-fold, or the 0.3-fold to 0.9-fold of the length of the connection strap (40) for lateral attachment, the clamping rail (10) may be attached to the front and/or rear of the medical or organisation cart (100), and/or that two to four clamping rails (10) may be attached respectively to one of the lateral, front and rear sides of the medical or organisation cart (100) at the same time.

12. The medical or organisation cart according to one of the previous Claims, **characterized in that** the projection (12) of the tension element (20) engages with an undercut (9) of a rear corner profile (8a) of the medical or organisation cart and the encompassing element (32) of the counter hold element (30) encompasses the adjacent front corner profile (8b).

13. The medical or organisation cart according to one of the previous Claims, **characterized in that** the tension element (20) and the counter hold element (30) have essentially an equal thickness as the connection strap (40), and that the tension element (20) and the counter hold element (30) are vertically broader than the connection strap (40) at the end which is more remote from the connection strap (40) and have an equal width as the connection strap (40) at the end which is closer to the connection strap (40), in particular for guaranteeing the horizontality of the clamping rail (10), wherein between the two ends of the tension element and the counter hold element (20) a slanted surface (56) is provided respectively.

## Revendications

1. Chariot de soins ou d'organisation (100) avec un rail de serrage (10) pour fixer des accessoires au chariot de soins ou d'organisation (100), où
- le chariot de soins ou d'organisation (100) présente des profils d'angle (8, 8a, 8b), dont au moins un présente une contre-dépouille (9) s'étendant verticalement,
- le rail de serrage (10) comporte un élément de serrage (20), un élément de maintien opposé (30) et un étrier de liaison (40) qui relie l'élément de serrage (20) à l'élément de maintien opposé (30) et à laquelle les accessoires peuvent être accrochés ou suspendus,
- l'élément de serrage (20) peut être relié de manière solidaire au profilé d'angle (8a) au niveau de la contre-dépouille verticale (9),
- le rail de serrage (10) peut être fixé au chariot de soins ou d'organisation (100) et libéré de celui-ci au moyen de l'élément de serrage (20), et
- le rail de serrage (10) peut être déplacé et fixé en continu dans le sens vertical à tout emplacement souhaité de la contre-dépouille verticale (9) et à un emplacement d'un profilé de coin adjacent (8b) correspondant horizontalement à cet emplacement,
**caractérisé en ce que**
l'élément de serrage (20) présente un élément de levier, où un bras de levier de l'élément de levier présente une saillie (12) qui s'engage dans la contre-dépouille verticale (9) et qui peut être reliée de manière solidaire au profilé d'angle (8a).

2. Chariot de soins ou d'organisation selon la revendication 1, **caractérisé en ce que** la saillie (12) peut être insérée comme une languette dans la contre-dépouille verticale (9) du profilé d'angle (8a) du chariot de soins ou d'organisation comme une rainure, et/ou **en ce que** la section transversale de la rainure est sensiblement en forme de V et forme un angle qui a une valeur comprise entre 10° et 70°, en particulier environ 45°.

3. Chariot de soins ou d'organisation selon l'une des revendications précédentes, **caractérisé en ce que** l'élément de contre-support (30) présente un élément d'enveloppement (32), en particulier un décalage, qui entoure le point correspondant horizontalement du profilé d'angle adjacent (8b).

4. Chariot de soins ou d'organisation selon l'une des revendications précédentes, **caractérisé en ce que** lorsque l'élément de serrage (20) est au moins partiellement libéré, le rail de serrage (10) peut être déplacé verticalement dans la contre-dépouille verticale (9).

5. Chariot de soins ou d'organisation selon l'une des revendications précédentes, **caractérisé en ce que** l'élément de levier est un levier à genouillère à deux bras (22) qui s'étend au-delà du point mort du levier à genouillère (22) lorsque la saillie (12) s'engage dans la contre-dépouille (9), et/ou **en ce que** l'élément de serrage (20) présente un excentrique.

6. Chariot de soins ou d'organisation selon la revendication 5, **caractérisé en ce que** le levier à genouillère (22) comporte une partie fixe (24) et une partie pivotante (26) qui est reliée à la partie fixe (24) par une articulation (28), où la partie pivotante (26) comporte les deux bras du levier à genouillère (22), et où le bras adjacent à la partie fixe (24) présente la saillie (12), et/ou **en ce que**, lors du serrage de l'élément de serrage (20), la surface de base du bras adjacent à la partie fixe (24) repose contre la partie fixe (24) et/ou une surface d'extrémité de la partie pivotante (26) repose contre le profilé d'angle (8a) ou une paroi adjacente à celui-ci.

7. Chariot de soins ou d'organisation selon l'une des revendications précédentes, **caractérisé en ce que** l'élément de serrage (20) et l'élément de maintien opposé (30) sont des pièces moulées et que l'étrier de liaison (40) est un profilé creux, en particulier en métal léger, et/ou **en ce que** les profilés d'angle (8, 8a, 8b) sont fabriqués par extrusion, et/ou **en ce que** la section transversale de l'étrier de liaison (40) est un profilé creux posé sur chant.

8. Chariot de soins ou d'organisation selon l'une des revendications précédentes, **caractérisé en ce que**, en vue de dessus, la contre-dépouille (9) du profilé d'angle (8a) est prévue dans la zone du centre de la courbe d'angle arrondie (14) et s'étend verticalement sur au moins une partie de la hauteur du chariot de soins ou d'organisation (100).

9. Chariot de soins ou d'organisation Chariot de soins ou d'organisation selon l'une des revendications précédentes, **caractérisé en ce que** la contre-dépouille (9) du profilé d'angle (8a) s'étend verticalement sur au moins 50%, de préférence au moins 80%, de la hauteur du chariot (100), en particulier plus de 90 % de la hauteur du chariot et/ou **en ce que** la contre-dépouille est formée symétriquement par rapport à son axe médian vertical et permet en particulier, le cas échéant, de suspendre l'élément de serrage (20) du rail de serrage (10) de telle sorte que l'étrier de raccordement (40) du rail de serrage (10) - vu depuis la contre-dépouille (9) - est dirigé soit vers l'un, soit vers l'autre côté horizontal.

10. Chariot de soins ou d'organisation selon l'une des revendications précédentes, **caractérisé en ce que** le rail de serrage (10) présente deux coudes (50) dans la direction longitudinale aux extrémités de l'élément de serrage (20) et de l'élément de maintien opposé (30), dont chacun présente un angle de courbure compris entre 30° et 120°.

11. Chariot de soins ou d'organisation selon l'une des revendications précédentes, **caractérisé en ce que** le rail de serrage (10) peut être fixé au choix latéralement à l'un des deux côtés du chariot de soins ou d'organisation (100), et/ou **en ce que** le rail de serrage (10) peut être fixé à l'avant et/ou à l'arrière du chariot de soins ou d'organisation (100) au moyen d'un étrier de liaison (40) plus long, dont la longueur est en particulier 1,1 à 2 fois ou 0,3 à 0,9 fois la longueur de l'étrier de liaison (40) pour la fixation latérale. (100), et/ou **en ce que** deux à quatre rails de serrage (10) peuvent être fixés simultanément respectivement sur l'un des côtés latéraux, avant et arrière du chariot de soins ou d'organisation (100).

12. Chariot de soins ou d'organisation selon l'une des revendications précédentes, **caractérisé en ce que** la saillie (12) de l'élément de serrage (20) s'engage dans une contre-dépouille (9) d'un profilé de coin arrière (8a) du chariot de soins ou d'organisation et l'élément d'enveloppement (32) de l'élément de maintien opposé (30) entoure le profilé de coin avant adjacent (8b).

13. Chariot de soins ou d'organisation selon l'une quelconque des revendications précédentes, **caractérisé en ce que** l'élément de serrage (20) et l'élément de maintien opposé (30) ont sensiblement la même épaisseur que le support de liaison (40), et **en ce que** l'élément de tension (20) et l'élément de maintien opposé (30) sont verticalement plus larges que la patte de raccordement (40) à l'extrémité la plus éloignée de la patte de raccordement (40) et ont la même largeur que la patte de raccordement (40) à l'extrémité la plus proche de la patte de raccordement (40), en particulier pour assurer l'horizontalité du rail de serrage (10), où une surface inclinée (56) est prévue entre chacune des deux extrémités de l'élément de tension et de l'élément de maintien opposé (30).
